# EUROPÄISCHE PATENTSCHRIFT

(11) **EP 4 067 046 B1**
(45) Veröffentlichungstag und Bekanntmachung des Hinweises auf die Patenterteilung: **07.06.2023**
(21) Anmeldenummer: 21165731.7
(22) Anmeldetag: 29.03.2021
(51) Int. Cl.: B29C 48/09, B29C 48/27

(54) **VERFAHREN ZUM SPÜLEN EINES EXTRUSIONSKOPFS, SPÜLANORDNUNG UND VERWENDUNG EINER SPÜLVORRICHTUNG**
METHOD FOR FLUSHING AN EXTRUSION HEAD, FLUSHING ARRANGEMENT AND USE OF A FLUSHING DEVICE
PROCÉDÉ DE RINÇAGE D'UNE TÊTE D'EXTRUSION, AGENCEMENT DE RINÇAGE ET UTILISATION D'UN DISPOSITIF DE RINÇAGE

(43) Veröffentlichungstag der Anmeldung: 05.10.2022
(73) Patentinhaber: W. Müller GmbH, 53842 Troisdorf (DE)
(72) Erfinder: PFLANZER, Heinz Peter, 53819 Neunkirchen-Seelscheid (DE)
(74) Vertreter: Neumann Müller Oberwalleney Patentanwälte PartG mbB

(56) Entgegenhaltungen:
- WO-A1-92/16351
- AT-U1- 989
- DE-A1-102014 112 709
- DE-C1- 19 643 224

## Beschreibung

Die vorliegende Erfindung betrifft ein Verfahren zum Spülen eines Extrusionskopfs zum Herstellen von schlauchförmigen Vorformlingen aus thermoplastischem Kunststoff, wobei an den Extrusionskopf ein Extruder zum Zuführen von Kunststoffschmelze in einer Hauptstromrichtung in einen Fließkanal des Extrusionskopfs angeschlossen oder anschließbar ist. Weiterhin betrifft die vorliegende Erfindung eine Spülanordnung zum Spülen eines Extrusionskopfs. Des Weiteren betrifft die vorliegende Erfindung eine Verwendung einer Spülvorrichtung zum Spülen einer Extrusionskopfs.

Aus der DE 19643224 C1 ist ein Extrusionskopf zum Herstellen von einschichtigen schlauchförmigen Vorformlingen aus extrudierbarem Kunststoff bekannt, an dem ein Extruder zum Zuführen von Kunststoffschmelze in einen Fließkanal des Extrusionskopfs angeschlossen ist. Der Fließkanal verengt sich in Fließrichtung der Kunststoffschmelze bis zu einer engsten Stelle. An dieser Engstelle können sich im Betrieb des Extrusionskopfs Verschmutzungen ansammeln, die zu sichtbaren Fehlern in der Schicht der Vorformlinge führen können. Um die Verschmutzungen zu entfernen, muss der Extrusionskopf ausgebaut und anschließend zerlegt werden, bevor der Fließkanal mechanisch gereinigt werden kann. Dies geht mit einem hohen Arbeitsaufwand einher und führt zu langen Stillstandszeiten in der Fertigung. Die Druckschrift AT 989 U1 offenbart ein Spülverfahren eines Extrusionskopfes.

Eine Aufgabe der Erfindung besteht darin, ein Verfahren bereitzustellen, mit dem der Extrusionskopf schneller und kostengünstiger zu reinigen ist. Des Weiteren besteht eine Aufgabe der Erfindung darin, eine Spülanordnung bereitzustellen, die schneller und kostengünstiger zu reinigen ist. Eine Aufgabe der Erfindung besteht weiterhin darin, eine Verwendung bereitzustellen, mit der der Extrusionskopf schneller und kostengünstiger zu reinigen ist.

Eine Lösung besteht in einem Verfahren der eingangs genannten Art, bei dem das Verfahren den Schritt umfasst: Spülen des Fließkanals in einem Kanalabschnitt, der zwischen einem mit dem Fließkanal verbundenen Zulauf und einem mit dem Fließkanal stromaufwärts vom Zulauf verbundenen Auslauf ausgebildet ist, wobei eine Spülvorrichtung ein Spülmedium über den Zulauf in den Kanalabschnitt des Fließkanals in einer der Hauptstromrichtung entgegengesetzten Spülstromrichtung hinein presst.

Von Vorteil ist, dass Verschmutzungen, die sich während der Herstellung von Vorformlingen im Fließkanal festsetzen oder ablagern können, durch Umkehrung der Fließrichtung gelöst und über den Auslauf aus dem Fließkanal herausgespült werden können. Das durch den Abschnitt des zu spülenden Fließkanals gepresste Spülmedium spült somit Fremdstoffe sowie mitunter noch vom Herstellungsprozess für die Vorformlinge enthaltene Kunststoffschmelze in der Spülstromrichtung heraus. Weiterhin von Vorteil ist, dass der Extrusionskopf im eingebauten Zustand, sprich vor Ort, gespült werden kann, ohne hierzu den Extrusionskopf demontieren zu müssen. Dadurch wird der Arbeitsaufwand deutlich verringert und die Produktionseffizienz erhöht. Weiterhin ist das Verfahren ressourcenschonender, da das Prinzip der Gegen- beziehungsweise Umkehrspülung gezeigt hat, dass bei Durchführung des Spülverfahrens auch Farb- oder Materialwechselzeiten an dem Extrusionskopf reduziert werden können.

Die Spülvorrichtung kann wahlweise im Normalbetrieb oder im Spülbetrieb betrieben werden. Die Hauptstromrichtung ist die, insbesondere von der Schwerkraft vorgegebene natürliche, Fließrichtung der Kunststoffschmelze durch den Fließkanal im Normalbetrieb, sprich während der Extrusion von Vorformlingen. Im Normalbetrieb strömt die vom Extruder eingespeiste Kunststoffschmelze durch den Fließkanal hin zu einem Kopfausgang des Extrusionskopfs, respektive einer Austrittsdüse eines angeschlossenen Düsenwerkzeugs. Damit kann die Spülanordnung im Normalbetrieb dem Extrusionsbetrieb eine herkömmlichen Extrusionsanordnung entsprechen. Die Spülstromrichtung kennzeichnet die der Hauptstromrichtung entgegengesetzte Fließrichtung im Fließkanal. Im Spülbetrieb presst die Spülvorrichtung das Spülmedium in der Spülstromrichtung durch den Kanalabschnitt des zu spülenden Fließkanals. Die Begriffe "stromaufwärts" und "vorgeschaltet" sowie "stromabwärts" und "nachgeschaltet" sind als räumliche Angaben bezogen auf die Hauptstromrichtung zu verstehen.

Insbesondere verengt sich der Fließkanal in der Hauptstromrichtung bis zu einer engsten Stelle, die auch als Engstelle bezeichnet wird. Dies kann jedoch dazu führen, dass im Normalbetrieb Fremdstoffe die Engstelle blockieren können. Dadurch, dass sich der Fließkanal in der Spülstromrichtung betrachtet wieder weitet, können die Fremdstoffe durch Umkehrung der Fließrichtung über den Auslauf herausgespült werden. Zweckmäßigerweise wird der Fließkanal somit zumindest in dem Kanalabschnitt gespült, in dem die Engstelle ausgebildet ist. Insbesondere liegt der Zulauf stromabwärts der Engstelle und der Auslauf stromaufwärts der Engstelle. Verunreinigungen können aus diversen Gründen in den Fließkanal gelangen. Die Kunststoffschmelze kann eine, insbesondere schmelzflüssige, thermoplastische Kunststoffschmelze sein. Da aus ökologischen Gründen dem Extruder immer häufiger Recycling-Kunststoffe zugeführt werden, können in der Kunststoffschmelze mitunter nicht aufgeschmolzene Fremdstoffe enthalten sein, die aufgrund deren Größe die Engstelle blockieren können. Auch bei Wartungsarbeiten können Fremdstoffe in den Fließkanal gelangen, die bislang nur durch Ausbau und aufwendiges Zerlegen des Extrusionskopfs mechanisch entfernt werden konnten. Dagegen ermöglicht das Spülverfahren das Entfernen von Fremdstoffen aus dem Fließkanal, ohne den Extrusionskopf abbauen und mechanisch Reinigen zu müssen. Weiterhin können auch Ablagerungen, die sich zum Beispiel in Strömungstotzonen des Fließkanals anlagern können, durch das Spülverfahren gelöst und durch den Auslauf herausgespült werden.

Weiterhin kann vorgesehen sein, dass die Engstelle in einem schlauchbildenden Abschnitt des Extrusionskopfs ausgebildet ist. Stromaufwärts vom schlauchbildenden Abschnitt kann der Fließkanal einen rohrförmigen, insbesondere zylindrischen Strömungsquerschnitt aufweisen. Im schlauchbildenden Abschnitt kann der Fließkanal einen ringförmigen Strömungsquerschnitt aufweisen. Ein Ringspalt des Fließkanals kann sich in der Hauptstromrichtung bis zur Engstelle, insbesondere kontinuierlich, verjüngen. Bei der Herstellung von schlauchförmigen Vorformlingen kann die Engstelle im Fließkanal einen Spaltdurchmesser von weniger als 1 Millimeter aufweisen. Bei einem Extrusionskopf zum Herstellen von einschichtigen Vorformlingen, sprich einem Einschicht-Extrusionskopf, kann im schlauchbildenden Abschnitt zum Beispiel ein Stegdornhalter ausgebildet sein. Bei einem Mehrschicht-Extrusionskopf kann im schlauchbildenden Abschnitt beispielsweise eine Wendel oder Herzkurve ausgebildet sein, wodurch die einzelnen schlauchförmigen Schichten zunächst getrennt voneinander geführt werden und sich ungehindert ausbilden können. Weiter stromabwärts werden die Schichten dann, insbesondere der Reihe nach von innen nach außen, einzeln zusammengeführt. Vorzugsweise können die übereinanderliegenden Schichten gemeinsam einen Kopfausgang des Extrusionskopfs verlassen. Stromabwärts vom Kopfausgang kann sich ein Düsenwerkzeug mit einem, insbesondere einstellbaren und/oder verschließbaren, Öffnungsspalt anschließen.

Um ein Festsetzen des Auslaufes zu verhindern, kann die Strömungskontur des Auslaufes der Strömungskontur des Fließkanals an der Anschlussstelle, an der sich der Fließkanal anschließt, entsprechen. Grundsätzlich kann ein Strömungsquerschnitt des Auslaufes gleich oder größer als ein Strömungsquerschnitt des Fließkanals an der Anschlussstelle sein.

Das Verfahren kann weiterhin den Schritt aufweisen: Öffnen des mit dem Fließkanal verbundenen Auslaufes. Insbesondere wird der Auslauf vor dem Schritt des Spülens, sprich vor Spülbeginn, geöffnet, sodass im Spülbetrieb das Spülmedium durch den Auslauf, insbesondere nach außen, austreten kann. Außerhalb des Extrusionskopfs kann es aufgefangen werden, um Verunreinigungen am Produktionsort zu vermeiden. Das Öffnen des Auslaufs kann beispielsweise manuell oder automatisch erfolgen. Vorzugsweise ist der Auslauf im Normalbetrieb des Extrusionskopfs geschlossen, beziehungsweise wird vor Beginn des Normalbetriebs geschlossen.

Gemäß einer ersten Ausführungsform kann der Schritt des Öffnens des mit dem Fließkanal verbundenen Auslaufes den Teilschritt umfassen: Öffnen eines Ventils, wobei der Auslauf einen Ventilkanal des Ventils umfasst. Dadurch kann der Extruder zum Spülen des Fließkanals am Extrusionskopf angeschlossenen sein beziehungsweise bleiben. Das von der Spülvorrichtung in der Spülstromrichtung durch den Fließkanal gepresste Spülmedium kann somit durch den Ventilkanal des Ventils, insbesondere nach außen, strömen. Insbesondere kann das Ventil zwischen einem Extruderausgang des Extruders und einer Einspeiseöffnung des Extrusionskopfs zum Fließkanal angeordnet sein. Das Ventil kann beispielsweise ein 2-Wege-Ventil sein, bei dem ein erster Weg zum Auslauf und ein zweiter Weg zum angeschlossenen Extruder führen können. Das Ventil kann ein Drehschieber, bei dem sowohl eine Dreh- wie auch eine Schiebebewegung durchgeführt wird, oder ein Drehventil oder ein Schiebeventil sein.

Gemäß einer zweiten Ausführungsform kann der Schritt des Öffnens des mit dem Fließkanal verbundenen Auslaufes den Teilschritt umfassen: Entfernen eines Verschlusselements aus einer an den Fließkanals angeschlossenen Auslaufbohrung, wobei der Auslauf die Auslaufbohrung umfasst. Dadurch kann der Extruder zum Spülen des Fließkanals am Extrusionskopf angeschlossenen sein beziehungsweise bleiben. Über die Auslaufbohrung kann der Auslauf nach außen münden, sodass das von der Spülvorrichtung durch den Fließkanals in der Spülstromrichtung gepresste Spülmedium nach außen strömen kann. Die Auslaufbohrung kann im Extrusionskopf, insbesondere einem Verteiler, respektive Umlenker des Extrusionskopfs oder beispielsweise in einem an das Extrusionskopf angeschlossenen Zwischenstück, respektive einem Adapter für den Extruder, oder einem Gehäuse des Extruders ausgebildet sein. Das Verschlusselement kann beispielsweise ein Stopfen sein, der in einem verschlossenen Zustand die Auslaufbohrung verschließt, sodass die vom Extruder zugeführte Kunststoffschmelze im Normalbetrieb des Extrusionskopfs in der Hauptstromrichtung durch den Fließkanals strömen kann. Statt eines Stopfens, der gesteckt sein kann, kann das Verschlusselement zum Beispiel ein Schraubmittel sein, dass im eingeschraubten Zustand die Auslaufbohrung verschließt. Von Vorteil ist, wenn das Verschlusselement im verschlossenen Zustand stirnseitig mit der Kanalwand des Fließkanals bündig abschließt, um das Strömungsverhalten der Kunststoffschmelze im Normalbetrieb nicht zu stören.

Gemäß einer dritten Ausführungsform kann der Schritt des Öffnens des mit dem Fließkanal verbundenen Auslaufs den Teilschritt umfassen: Trennen des Extruders vom Extrusionskopf, wobei der Auslauf eine Einspeiseöffnung des Extrusionskopf zum Fließkanal umfasst. Von Vorteil ist, dass dadurch der Fließkanal eines herkömmlichen Extrusionskopfs, der über keinen separaten Auslauf verfügt, gespült werden kann. Hierbei ist ausreichend, wenn der Extruder um etwa 15 bis 20 Zentimeter vom Extrusionskopf weggezogen, respektive beabstandet wird. Nach dem Trennen ist die Einspeiseöffnung zum Fließkanal freigegeben, sodass das Spülmedium nach außen ausströmen kann.

Um den Spüldruck im Kanalabschnitt des zu spülenden Fließkanals zu erhöhen, kann vor dem Schritt des Spülens des Fließkanals der Öffnungsspalt des an ein Gehäuseteil des Extrusionskopfs angeschlossenen Düsenwerkzeugs geschlossen werden. Dadurch wird ein Austreten des Spülmediums durch den Öffnungsspalt des Düsenwerkzeugs, der in der Hauptstromrichtung stromabwärts vom Fließkanal und vom Zulauf angeordnet ist, verhindert. Weiterhin kann das Düsenwerkzeug einen verschließbaren Spüleingang aufweisen. Vor dem Schritt des Spülens kann ein Spülausgang der Spülvorrichtung mit dem Spüleingang des Düsenwerkzeugs verbunden werden. Der Zulauf kann den Spüleingang umfassen.

Das an dem Gehäuseteil des Extrusionskopfs angeschlossene Düsenwerkzeug kann auch demontiert und stattdessen eine Verschlussvorrichtung am Gehäuseteil montiert werden, sodass ein sich an den Fließkanal in der Hauptstromrichtung anschließender Kopfausgang des Extrusionskopfs nach außen hin verschlossen ist. Die Verschlussvorrichtung kann einen verschließbaren Spüleingang aufweisen, an den die Spülvorrichtung angeschlossen werden kann. Von Vorteil ist, dass der Fließkanal eines herkömmlichen Extrusionskopfs mit dem Spülverfahren gespült werden kann. Hierzu wird lediglich das Düsenwerkzeug gegen die Verschlussvorrichtung ausgetauscht und die Spülvorrichtung an die Verschlussvorrichtung angeschlossen. Sofern der Extruder angeschlossen ist, wird dieser nur noch vom Extrusionskopf getrennt.

Gemäß einer Ausgestaltung kann der Zulauf einen im Extrusionskopf ausgebildeten Zusatzkanal umfassen. Der Zusatzkanal kann stromabwärts von dem schlauchbildenden Abschnitt an einen Ringkanal im Extrusionskopf anschließen. Als Zusatzkanal wird ein Kanal verstanden, der im Gegensatz zum Fließkanal nicht zum Herstellen der Schicht(en) des Vorformlings verwendet wird. Im Normalbetrieb des Extrusionskopfs strömt somit keine Kunststoffschmelze durch den Zusatzkanal. Der Zusatzkanal wird nur im Spülbetrieb zum Leiten des Spülmediums verwendet. Der Zusatzkanal kann mit einem Sperrelement verschließbar sein. Dadurch wird verhindert, dass im Normalbetrieb die Kunststoffschmelze in den Zusatzkanal abfließen kann. Insbesondere kann der Zusatzkanal an seinem dem Fließkanal zugewandten Kanalende mit dem Sperrelement verschließbar sein. Das Sperrelement kann in den Zusatzkanal eingesetzt sein. Beispielsweise kann das Sperrelement durch eine von außen zugängliche Bohrung in den Zusatzkanal hinein ragen. Auf diese Weise kann das Sperrelement von außen erreichbar sein, um den Zusatzkanal manuell freizugeben. Das Sperrelement kann beispielsweise ein Stopfen oder ein Sperrschieber sein, der in einem versperrten Zustand insbesondere das dem Fließkanal zugewandte Kanalende des Zusatzkanals verschließt. Weiterhin kann das Sperrelement zum Beispiel ein Schraubmittel sein, dass im eingeschraubten Zustand den Zusatzkanal versperrt. Insbesondere schließt das Sperrelement im versperrten Zustand bündig innenseitig mit dem Strömungsweg der Kunststoffschmelze ab, um deren Strömungsverhalten nicht zu stören. Weiterhin kann das Verfahren vor dem Schritt des Spülens des Fließkanals zumindest einen der folgenden Schritte umfassen: Anschließen der Spülvorrichtung an den Zulauf; Überführen des Sperrelements in eine Freigabestellung, in der der Zusatzkanal mit dem Fließkanal fluidisch, respektive schmelzeleitend verbunden ist.

In bevorzugter Weise ist die Spülvorrichtung ein Fördergerät mit einer Schnecke, respektive ein Extruder, wobei das Spülmedium eine Kunststoffschmelze sein kann. Die Spülvorrichtung kann auch als Spül-Extruder bezeichnet werden. Der für die Schichtherstellung der Vorformlinge vorgeschaltete Extruder kann dagegen als Haupt-Extruder oder als vorgeschalteter Extruder bezeichnet werden. Die Spülvorrichtung kann eine mobil einsetzbare, respektive von dem Extrusionskopf autonome Vorrichtung sein. Insbesondere ist die Spülvorrichtung im Normalbetrieb des Extrusionskopfs deaktiviert und/oder von dem Extrusionskopf getrennt. Insbesondere wird die Spülvorrichtung nur bei Bedarf zum Spülen angeschlossen. Die Spülvorrichtung kann mittels Schraub- oder Spannmitteln an dem Extrusionskopf befestigbar sein. Der Spülausgang der Spülvorrichtung kann, insbesondere direkt, am Zulauf zum zu spülenden Fließkanal angeschlossen werden. Ebenso möglich ist, dass die Spülvorrichtung pneumatisch oder hydraulisch arbeitet, und das Spülmedium eine insbesondere warme Flüssigkeit oder Druckluft ist. Die Spülvorrichtung kann somit auch eine Wasserdruckpumpe, ein Kompressor oder dergleichen sein.

Zum Herstellen von einschichtigen Vorformlingen ist an dem Extrusionskopf nur der eine Haupt-Extruder zum Zuführen der Kunststoffschmelze in den Fließkanal in der Hauptstromrichtung angeschlossen. Der vorgeschaltete Extruder speist somit die zum Herstellen der Schicht verwendete Kunststoffschmelze in den Fließkanal des Extrusionskopfs ein. Bei dem Einschicht-Extrusionskopf wird die Spülvorrichtung, wie vorstehend beschrieben, vor dem Spülbetrieb an den Zulauf des Fließkanals des Extrusionskopfs angeschlossen. Dies ist am Produktionsort möglich, wobei der Extrusionskopf auch insbesondere zu Wartungs- oder Instandsetzungsmaßnahmen ausgebaut sein kann und mit der Spülvorrichtung gespült werden kann.

Wenn der Extrusionskopf zum Herstellen von mehrschichtigen Vorformlingen ausgebildet ist, weist der Extrusionskopf je herzustellender Schicht einen Haupt-Extruder zum Zuführen von Kunststoffschmelze und einen Fließkanal auf, an dem der jeweilige Haupt-Extruder angeschlossen ist. Stromabwärts münden die Fließkanäle in einen gemeinsamen Ringraum des Extrusionskopfs, sodass die Schichten im Kopfausgang des Extrusionskopfs übereinandergelegt und übereinanderliegend in das Düsenwerkzeug fließen können. Der Mehrschicht-Extrusionskopf kann am Produktionsort gespült werden, wobei der Extrusionskopf auch insbesondere zu Wartungs- oder Instandsetzungsmaßnahmen ausgebaut sein kann und mit der Spülvorrichtung gespült werden kann.

Weiterhin kann beim mehrschichtigen Extrusionskopf vor dem Schritt des Spülens des Fließkanals der zu spülende Fließkanal aus einer Gesamtmenge von Fließkanälen des Extrusionskopfs ausgewählt werden. Dabei kann die Auswahl durch optische Kontrolle des mit dem Extrusionskopf extrudierten Vorformlings erfolgen, indem überprüft wird, in welcher der Schichten des Vorformlings ein sichtbarer Fehler auftritt. Der zugehörige Fließkanal, mit dem die fehlerhafte Schicht extrudiert wurde, wird dann für das Spülen ausgewählt. Üblicherweise treten Fehler in einer Mittelschicht des mehrschichtigen Vorformlings auf, da dem Extruder für die Mittelschicht vermehrt Granulate aus Recycling-Kunststoffen zugeführt werden. Diese können Fremdstoffe enthalten, die im Extruder nicht verflüssigt werden und im Verlauf des Fließkanals, insbesondere an der Engstelle hängen bleiben können. Es versteht sich von selbst, dass das Spülen auch aus anderen Gründen durchgeführt werden kann, beispielsweise bei einem Material- oder Farbwechsel oder zu Wartungszwecken. Statt der vorbeschriebenen Auswahl des zu spülenden Fließkanals aus der Gesamtmenge von Fließkanälen ist es grundsätzlich auch möglich, alle Fließkanäle gleichzeitig zu spülen. Hierzu kann der Zulauf stromabwärts von den Fließkanälen angeordnet sein, und beispielsweise den Spüleingang am Düsenwerkzeug oder der Verschlussvorrichtung umfassen, und an jedem der Fließkanäle kann ein Auslauf angeschlossen sein.

Um den zumindest einen verbleibenden, respektive nicht ausgewählten Fließkanal nicht mit zu spülen, kann vor dem Schritt des Spülens des ausgewählten Fließkanals in dem Extruder, der dem nicht ausgewählten Fließkanal vorgeschaltet ist, ein Pfropfen erzeugt werden, um ein Rückfließen des Spülmediums über den zumindest einen nicht zu spülenden Fließkanal zu verhindern. Hierzu kann die Kunststoffschmelze unter deren Fließtemperatur abgekühlt werden. Die vorzugsweise thermoplastische Kunststoffschmelze nimmt im abgekühlten Zustand einen festen, respektive gummielastischen Zustand ein. Nach dem Spülvorgang kann die Temperatur wieder hochgefahren werden, um den Pfropfen zu lösen und die Thermoplaste zurück in den plastischen, respektive fließfähigen Zustand zu überführen. Wenn bei einem Mehrfachextrusionskopf, mit dem mehrere Vorformlinge gleichzeitig extrudiert werden können, nur einer der Extrusionsköpfe gezielt gespült werden soll, können Heizelemente in den Gehäuseteilen der übrigen Extrusionsköpfe ausgeschaltet oder heruntergeregelt werden.

Bei dem mehrschichtigen Extrusionskopf kann auch zumindest einer der Haupt-Extruder die Funktion der Spülvorrichtung während des Spülbetriebs übernehmen. Der dem zumindest einen nicht ausgewählten Fließkanal vorgeschaltete Extruder kann die Kunststoffschmelze, welche dann als Spülmedium fungiert, in den ausgewählten Fließkanal in der Spülrichtung des ausgewählten Fließkanals hinein pressen. Hierzu wird, wie vorstehend beschrieben, vor dem Schritt des Spülens des ausgewählten Fließkanals der Öffnungsspalt des Düsenwerkzeugs geschlossen oder das Düsenwerkzeug demontiert und die Verschlussvorrichtung montiert, um den Kopfausgang des Extrusionskopfs zu verschließen. Dann umfasst der Zulauf den nicht ausgewählten Fließkanal, durch den das Spülmedium strömt, und den gemeinsamen Ringkanal im Kopfausgang des Extrusionskopfs, in den die Fließkanäle stromabwärts vom schlauchbildenden Abschnitt münden. Grundsätzlich können auch mehrere der Haupt-Extruder zum Spülen des ausgewählten Fließkanals eingesetzt werden, die den nicht zu spülenden Fließkanälen vorgeschaltet sind. Auf diese Weise kann der Schritt des Abkühlens zur Rückflussverhinderung entfallen. Der Spüldruck kann durch Regelung der Drehzahlen der als Spülvorrichtungen verwendeten Haupt-Extruder gesteuert werden.

Weiterhin kann der Fluiddruck in dem zu spülenden Fließkanal überwacht werden. Abhängig vom gemessenen Leitungs- beziehungsweise Fluiddruck kann der von der Spülvorrichtung erzeugte Spüldruck erhöht oder verringert werden, beispielweise durch Erhöhen oder Verringern der Drehzahl der Förderschnecke der Spülvorrichtung. Vorzugsweise ist stromaufwärts vom Fließkanal ein erster Drucksensor und stromabwärts vom Fließkanal ein zweiter Drucksensor angeordnet. Dadurch kann das Spülen des Fließkanals automatisiert werden. Bei dem Mehrschicht-Extruder ist vorzugsweise jedem Fließkanal ein erster Drucksensor zugeordnet. Bezüglich des zweiten Drucksensors reicht es aus, einen einzigen zweiten Drucksensor im stromabwärts der Fließkanäle ausgebildeten Ringraum, insbesondere am Kopfausgang des Extrusionskopfs oder am Düsenwerkzeug oder an der Verschlussvorrichtung anzuordnen.

Eine weitere Lösung der oben genannten Aufgabe besteht in einer Spülanordnung zum Spülen eines Extrusionskopfs zum Herstellen von schlauchförmigen Vorformlingen aus thermoplastischem Kunststoff, wobei an den Extrusionskopf ein Extruder zum Zuführen von Kunststoffschmelze in einer Hauptstromrichtung in einen Fließkanal des Extrusionskopfs angeschlossen oder anschließbar ist, wobei die Spülvorrichtung eine Spülvorrichtung zum Durchführen des vorbeschriebenen Verfahrens aufweist, die an einem mit dem Fließkanal verbundenen Zulauf angeschlossen oder anschließbar ist. Der Extrusionskopf kann ein Einfach- oder Mehrfach-Extrusionskopf sein. Weiterhin kann der mit dem Fließkanal verbundene Auslauf stromabwärts vom Extruderausgang des vorgeschalteten Extruders und stromaufwärts vom Zulauf sein, der mit dem Fließkanal verbunden ist. Des Weiteren kann stromaufwärts vom Fließkanal der erste Drucksensor zum Überwachen eines ersten Fluiddrucks und stromabwärts vom Fließkanal der zweite Drucksensor zum Überwachen eines zweiten Fluiddrucks angeordnet sein. Insbesondere kann der erste Drucksensor im Auslass und der zweite Drucksensor kann am Zulauf oder stromabwärts vom Zulauf angeordnet sein. Weiterhin kann der Extrusionskopf einen schlauchbildenden Abschnitt aufweisen, in dem sich der Fließkanal in der Hauptstromrichtung bis hin zur Engstelle verjüngt, wobei in der Hauptstromrichtung stromaufwärts von der Engstelle der Auslauf mit dem Fließkanal verbunden sein kann, und wobei in der Hauptstromrichtung stromabwärts der Engstelle der Zulauf für die Spülvorrichtung zum Fließkanal ausgebildet sein kann. Der zweite Drucksensor kann stromabwärts von der Engstelle angeordnet sein.

Eine noch weitere Lösung der oben genannten Aufgabe besteht in einer Verwendung einer Spülvorrichtung zum Spülen eines Extrusionskopfs zum Herstellen von schlauchförmigen Vorformlingen aus thermoplastischem Kunststoff, wobei der Extrusionskopfs eine Einspeiseöffnung zum Anschließen eines Extruders zum Zuführen von Kunststoffschmelze in einer Hauptstromrichtung in einen Fließkanal des Extrusionskopfs aufweist, wobei an einen mit dem Fließkanal verbundenen Zulauf die Spülvorrichtung angeschlossen wird, um ein Spülmedium über den Zulauf in einer der Hauptstromrichtung entgegengesetzten Spülstromrichtung in den Fließkanal hinein zu pressen. In bevorzugter Weise ist die Spülvorrichtung ein Fördergerät mit einer Schnecke, respektive ein Extruder, wobei das Spülmedium eine Kunststoffschmelze sein kann. Die Spülvorrichtung kann auch als Spül-Extruder bezeichnet werden.

Durch die erfindungsgemäße Spülanordnung beziehungsweise die erfindungsgemäße Verwendung ergeben sich dieselben Vorteile, wie sie im Zusammenhang mit dem erfindungsgemäßen Verfahren beschrieben worden sind, sodass hier abkürzend auf obige Beschreibung Bezug genommen wird. Dabei versteht es sich, dass alle genannten Ausgestaltungen des Verfahrens und im Zusammenhang mit dem Verfahren beschriebenen Ausgestaltungen des Extrusionskopfs, des Extruders, des Düsenwerkzeugs, der Verschlussvorrichtung, der Spülanordnung, etc. beziehungsweise die Verwendung übertragbar sind und umgekehrt. Insgesamt ist die erfindungsgemäße Spülanordnung beziehungsweise mit der erfindungsgemäßen Verwendung der Extrusionskopf schneller und kostengünstiger zu reinigen.

Bevorzugte Ausführungsbeispiele der vorliegenden Erfindung werden in den Zeichnungen dargestellt und nachstehend beschrieben. Hierin zeigt:
- Figur 1: eine Spülanordnung zum Spülen eines Extrusionskopfs zum Herstellen von einschichtigen schlauchförmigen Vorformlingen aus thermoplastischem Kunststoff gemäß einer ersten Ausführungsform der vorliegenden Erfindung in schematischer Schnittansicht, wobei eine Spülvorrichtung von dem Extrusionskopf getrennt ist und der Extrusionskopf im Normalbetrieb gezeigt ist;
- Figur 2: die Spülanordnung aus Figur 1, wobei die Spülvorrichtung an den Extrusionskopf angeschlossen und die Spülanordnung im Spülbetrieb gezeigt ist;
- Figur 3: eine Spülanordnung mit einem Extrusionskopf zum Herstellen von dreischichtigen schlauchförmigen Vorformlingen aus thermoplastischem Kunststoff und einer angeschlossenen Spülvorrichtung gemäß einer zweiten Ausführungsform der vorliegenden Erfindung in schematischer Schnittansicht, wobei die Spülvorrichtung deaktiviert ist und der Extrusionskopf im Normalbetrieb gezeigt ist;
- Figur 4: die Spülanordnung aus Figur 3, wobei die Spülanordnung im Spülbetrieb gezeigt ist;
- Figur 5: eine Spülanordnung mit einem Extrusionskopf zum Herstellen von dreischichtigen schlauchförmigen Vorformlingen aus thermoplastischem Kunststoff und einer Spülvorrichtung gemäß einer dritten Ausführungsform der vorliegenden Erfindung in schematischer Schnittansicht, wobei der Extrusionskopf im Normalbetrieb gezeigt ist;
- Figur 6: die Spülanordnung aus Figur 5, wobei die Spülanordnung im Spülbetrieb gezeigt ist;
- Figur 7: eine vergrößerte Teildarstellung der Spülanordnung aus Figur 6, wobei ein alternativer Auslauf gezeigt ist, wobei der Auslauf geschlossen ist;
- Figur 8: die vergrößerte Teildarstellung aus Figur 7, wobei der Auslauf geöffnet ist;
- Figur 9: eine vergrößerte Teildarstellung der Spülanordnung aus Figur 6, wobei ein weiterer alternativer Auslauf gezeigt ist, wobei der Auslauf geschlossen ist;
- Figur 10: die vergrößerte Teildarstellung aus Figur 9, wobei der Auslauf geöffnet ist; und
- Figur 11: eine vergrößerte Teildarstellung der Spülanordnung aus Figur 6, wobei eine Verschlussvorrichtung zum Verschließen eines Kopfausgangs des Extrusionskopfs gezeigt ist.

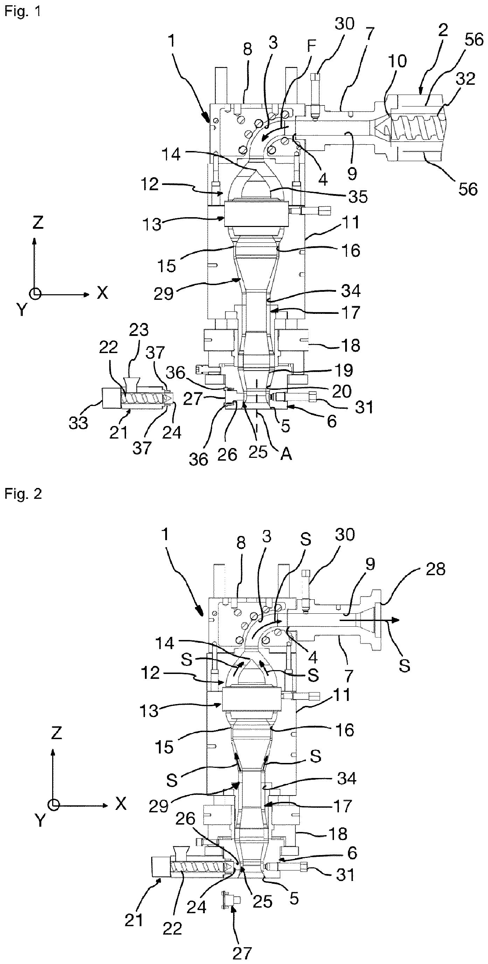

In der Figur 1 ist eine Spülanordnung gemäß einer ersten Ausführungsform gezeigt. Die Spülanordnung umfasst einen Extrusionskopf 1 zum Herstellen von einschichtigen schlauchförmigen Vorformlingen aus thermoplastischem Kunststoff. An den Extrusionskopf 1 ist ein Extruder 2 zum Zuführen von Kunststoffschmelze in einen Fließkanal 3 des Extrusionskopfs 1 angeschlossen. Der Extruder 2 speist die Kunststoffschmelze in den Fließkanal 3 in einer Hauptstromrichtung ein, die mit dem Pfeil F verdeutlicht ist. Der dem Fließkanal 3 vorgeschaltete Extruder 2 kann auch als Haupt-Extruder bezeichnet werden. Die Hauptstromrichtung F folgt dem Verlauf des Fließkanals 3 und ist von einem Einspeisepunkt, respektive einer Einspeiseöffnung 4 des Extrusionskopfs 1 hin zu einem Öffnungsspalt 5 eines Düsenwerkzeugs 6 gerichtet.

Zur Verdeutlichung der Ausrichtung der Spülanordnung im Raum ist ein kartesisches Koordinatensystem mit den Raumachsen X, Y, Z definiert und durch entsprechende Pfeile angegeben. Eine Extrusionsachse A des Extrusionskopfs 1, respektive des Düsenwerkzeugs 6 erstreckt sich parallel zur Raumachse Z.

Der Extruder 2 ist als Einschneckenextruder mit einer Extruderschnecke 32 ausgebildet. In an sich bekannter Weise umfasst der Extruder 2 als Eingangsschnittstelle zur Materialversorgung einen (nicht gezeigten) Maschinentrichter, in dem der Kunststoff in der Regel als rieselfähiges Granulat bereitgestellt wird. Der Maschinentrichter wird durch entsprechende stromaufwärts liegende Anlagenkomponenten mit dem Granulat und gegebenenfalls rezykliertem Mahlgut gefüttert, wobei zumeist auch produktspezifische Rezepturbestandteile zugemischt werden. Die Schwerkraft im vertikal zur (nicht gezeigten) Einfüllöffnung des Extruders 2, respektive parallel zur Hochachse Z angeordneten Maschinentrichter kann aufgrund der Rieselfähigkeit aller Rezepturbestandteile ausreichend zur Förderung sein. Zum Plastifizieren des eingefüllten Kunststoffgranulats weist der Extuder 2 regelbare Heizelemente 56 auf.

Der Extruder 2 ist über einen Adapter 7 an einem Umlenker 8 des Extrusionskopfs 1 gehalten. Der Adapter 7 weist eine Adapterbohrung 9 auf, die einen Extruderausgang 10 des Extruders 2 mit der Einspeiseöffnung 4 zum Fließkanal 3 des Extrusionskopfs 1 schmelzeleitend verbindet. Der Fließkanal 3 folgt im Umlenker 8 einem Bogen von, hier exemplarisch 90 Grad. Der Umlenker 8 ist auf einem Gehäuseteil 11 des Extrusionskopfs 1 montiert. Im Gehäuseteil 11 ist ein schlauchbildender Abschnitt 12 ausgebildet, der, wie hier am Beispiel des Einschicht-Extrusionskopfs 1 gezeigt, ein Stegdornhalterwerkzeug 13 mit einem zentral gehaltenen Dorn 35 umfassen kann. Stromabwärts von einer Spitze 14 des Stegdornhalterwerkzeugs 13 weist der Fließkanal 3 einen ringförmigen Strömungsquerschnitt auf. Stromaufwärts von der Spitze 14 ist der Fließkanal 3 rohrförmig, respektive zylindrisch ausgebildet. Im stromabwärtigen Verlauf des schlauchbildenden Abschnitts 12 verjüngt sich der Fließkanal 3 bis hin zu einer engsten Stelle, die als Engstelle 15 bezeichnet wird. Die Breite eines Ringspalts 16 des Fließkanals 3 an der Engstelle 15 kann beispielsweise weniger als 1 Millimeter betragen.

Stromabwärts von der Engstelle 15 mündet der Fließkanal 3 in einen Ringraum 34 im Kopfausgang 17 des Extrusionskopfs 1. An den Kopfausgang 17 schließt sich das Düsenwerkzeug 6 an, das an einem Träger 18 wechselbar am Gehäuseteil 11 befestigt ist. In dem Düsenwerkzeug 6 ist ein Kern 19 angeordnet, der zum Einstellen und Verschließen des Öffnungsspalts 5 mit dem Dorn 35 verbunden sein kann.

Im Normalbetrieb, das heißt während der Extrusion der Vorformlinge, speist der Extruder 2 die Kunststoffschmelze in den Fließkanal 3 in der Hauptstromrichtung F ein. Die Kunststoffschmelze strömt über die Spitze 14 des Stegdornhalterwerkzeugs 13 und umströmt den Dorn 35, passiert die Engstelle 15 und strömt weiter stromabwärts durch den Ringraum 34 des Kopfausgangs 17 in einen Ringraum 20 des Düsenwerkzeugs 6, bevor die Kunststoffschmelze als schlauchförmiger Vorformling aus dem Öffnungsspalt 5 extrudiert wird.

Fremdstoffe, die beispielsweise im Extruder 2 nicht vollständig aufgeschmolzenen wurden, werden von der Kunststoffschmelze in der Hauptstromrichtung F mittransportiert und können an der Engstelle 15 hängen bleiben und diese blockieren. Zum Entfernen solcher Fremdstoffe kann der Fließkanal 3, wie in der Figur 2 gezeigt, in einer der Hauptstromrichtung F entgegengesetzten Spülstromrichtung gespült werden. Die Spülstromrichtung ist mit den Pfeilen S verdeutlicht. Es versteht sich von selbst, dass der Fließkanal 3 auch bei anderen Ereignissen, wie zum Beispiel bei einem anstehenden Farb- oder Materialwechsel am Extrusionskopf 1, gespült werden kann.

Zum Spülen des Fließkanals 3 ist eine Spülvorrichtung 21 vorgesehen, die im Normalbetrieb, der in der Figur 1 gezeigt ist, von dem Extrusionskopf1 getrennt und deaktiviert ist. Die Spülvorrichtung 21 ist, wie der Extruder 2, ein Einschneckenextruder und weist eine Extruderschnecke 22 zum Extrudieren einer Kunststoffschmelze und eine Zuführvorrichtung 23, beispielsweise ein Fülltrichter, zum Zuführen des zu verarbeitenden Materials von oben in die Extruderschnecke 22 auf. Die Extruderschnecke 22 ist mit einem Antrieb 33 gekoppelt, der in an sich bekannter Weise einen Motor und ein Getriebe aufweisen kann. Die von der Spülvorrichtung 21 extrudierte Kunststoffschmelze ist das Spülmedium.

Vor dem Schritt des Spülens des Fließkanals 3 wird die Spülvorrichtung 21 am Düsenwerkzeug 6 montiert. Hierzu kann die Spülvorrichtung 21, wie in der Figur 2 beispielhaft gezeigt, seitlich am Düsenwerkzeug 6 angebracht und mit Bolzen 37 am Düsenwerkzeug 6 befestigt werden. Ein Extruderausgang der Spülvorrichtung 21, der als Spülausgang 24 bezeichnet wird, wird in einen nach außen hin offenen Spüleingang 26 am Düsenwerkzeug 6 eingesetzt, der mit dem Ringraum 20 des Düsenwerkzeugs 6 schmelzeleitend verbunden ist. Der Spülausgang 24 gehört zu einem Zulauf 25, der weiterhin den Ringraum 20 des Düsenwerkzeugs 6 und den Ringraum 34 des Kopfausgangs 17 des Extrusionskopfs 1 umfasst. Die Spülvorrichtung 21 ist sodann über den Zulauf 25 an das stromabwärtige Ende des Fließkanals 3 angeschlossen.

Im Normalbetrieb, wie in der Figur 1 gezeigt, ist der Spüleingang 26 mit einem Verschluss 27, insbesondere einem Stopfen, verschlossen, der mittels Schrauben 36 am Düsenwerkzeug 6 befestigt sein kann. Um die Extrusion der Vorformlinge im Normalbetrieb nicht zu beeinflussen, schließt der Verschluss 27 stirnseitig mit dem Ringraum 20 ab. Vor dem Spülen wird der Verschluss 27 entnommen und der Spülausgang 26 der Spülvorrichtung 21 am Spüleingang 26 des Düsenwerkzeugs 6 angeschlossen, wie in der Figur 2 gezeigt.

Weiterhin wird vor dem Schritt des Spülens des Fließkanals 3 der Öffnungsspalt 5, beispielsweise durch Runterfahren der Düse relativ zum Kern 19 entlang der Extrusionsachse A, geschlossen. Zudem wird vor dem Schritt des Spülens ein mit dem Fließkanal 3 stromaufwärts vom Zulauf 25 verbundener Auslauf 28 geöffnet, der in der Figur 2 gezeigt ist. Hierzu wird der Extruder 2 vom Extrusionskopf 1, respektive vom Adapter 7, gelöst und kann um wenige Zentimeter zurückgezogen werden, um die Adapterbohrung 9 freizugeben. Damit verbindet der Auslauf 28, der die Adapterbohrung 9 umfasst, das stromaufwärtige Ende des Fließkanals 3 mit der Umgebung.

Im nächsten Schritt kann die Spülvorrichtung 21 betätigt werden, um den Fließkanal 3 in einem Kanalabschnitt 29, der zwischen dem Zulauf 25 und dem Auslauf 28 ausgebildet ist, zu spülen. In der hier gezeigten Ausführungsform umfasst der Kanalabschnitt 29 die gesamte Länge des Fließkanals 3. Die Spülvorrichtung 21 presst nun das Spülmedium über den Zulauf 25 in den Fließkanal 3 in der Spülstromrichtung S hinein. Vorhandende Restmengen an Kunststoffschmelze, die im Normalbetrieb vor Beginn des Spülbetriebs vom Haupt-Extruder 2 in den Fließkanal 3 eingespeist wurden, können nun zusammen mit den sich an der Engstelle 15 festgesetzten Fremdkörpern in der Spülstromrichtung S aus dem Auslauf 28 herausgespült werden. Der Spülvorgang kann so lange durchgeführt werden, bis nur noch das Spülmedium aus dem Auslauf 28 nach außen austritt.

Zum Überwachen des Fluiddrucks im Fließkanal 3 während des Spülvorgangs sind zwei Drucksensoren vorgesehen, nämlich ein erster Drucksensor 30 und ein zweiter Drucksensor 31. Der erste Drucksensor 30 ist in einer Bohrung des Adapters 7 eingesetzt und misst den Fluiddruck im Auslauf 28. Der zweite Drucksensor 31 ist in einer Bohrung des Düsenwerkzeugs 6, hier exemplarisch diametral gegenüber dem Spüleingang 26, eingesetzt und misst den Fluiddruck im Ringraum 20. Zu Beginn des Spülvorgangs wird der vom zweiten Drucksensor 31 gemessene Fluiddruck zunächst ansteigen. Erst wenn die Engstelle 15 freigespült ist, wird der Fluiddruck am ersten Drucksensor 30 und am zweiten Drucksensor 31 zumindest in etwa gleich groß sein. Sollte der Fluiddruck im Ringraum 20 einen definierten Wert überschreiten, so kann die Spülstromrichtung 21 gestoppt werden, um Beschädigungen am Extrusionskopf 1 zu verhindern. Das Spülen kann bei einem computerunterstützten Spülprogramm auch automatisch erfolgen.

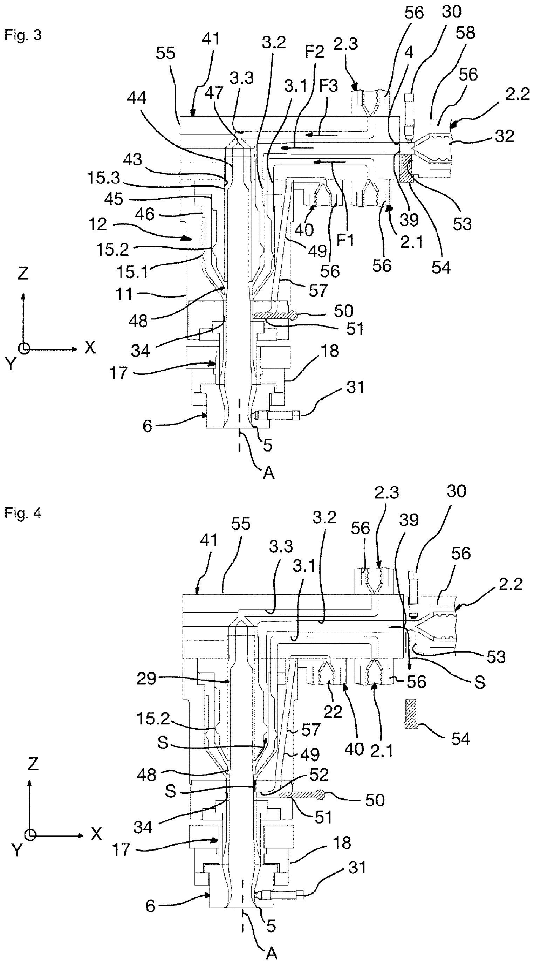

In den Figuren 3 und 4 ist eine Spülanordnung gemäß einer zweiten Ausführungsform gezeigt. Die Spülanordnung entspricht weitestgehend der Spülanordnung gemäß den Figuren 1 und 2, auf deren Beschreibungen hinsichtlich der Gemeinsamkeiten insofern Bezug genommen wird. Dabei sind gleiche beziehungsweise abgewandelte Einzelheiten mit gleichen Bezugszeichen versehen.

Die vorliegende Spülanordnung weist einen Extrusionskopf 41 zum Herstellen von mehrschichtigen, hier dreischichtigen schlauchförmigen Vorformlingen aus thermoplastischem Kunststoff auf. Je herzustellender Schicht ist ein Extruder 2.1, 2.2, 2.3 zum Zuführen von Kunststoffschmelze in jeweils einen Fließkanal 3.1, 3.2, 3.3 des Extruderkopfs 31 an einem Verteiler 55 des Extrusionskopfs 41 angeschlossen, der, analog zum Umlenker 8 in den Figuren 1 und 2, am Gehäuseteil 11 montiert ist. Die Extruder 2.1, 2.2, 2.3 speisen deren Kunststoffschmelzen in den jeweils angeschlossen Fließkanal 3.1, 3.2, 3.3 in der jeweiligen Hauptstromrichtung F1, F2, F3 ein. Die den Fließkanälen 3.1, 3.2, 3.3 vorgeschalteten Extruder 2.1, 2.2, 2.3 können auch als Haupt-Extruder bezeichnet werden.

Im Normalbetrieb speist der mittlere Haupt-Extruder 2.2 die Kunststoffschmelze für eine mittlere Schicht des dreischichtigen Vorformlings ein, wogegen der äußere Haupt-Extruder 2.1 die Kunststoffschmelze für eine äußere Schicht und der innere Haupt-Extruder 2.3 die Kunststoffschmelze für eine innere Schicht des Vorformlings einspeist. Ein Extruder-Gehäuse 38 des Haupt-Extruders 2.2, welches auch als Extruder-Rohr bezeichnet werden kann, weist eine schmelzeleitende Ausgangsbohrung 39 auf, über die der Haupt-Extruder 2.2 mit der Einspeiseöffnung 4 zum Fließkanal 3.2 verbunden ist. Hier kann, wie in den Figuren 1 und 2 gezeigt, auch der Adapter 7 zwischengeschaltet sein. An die Ausgangsbohrung 39 ist eine Auslaufbohrung 53 angeschlossen, die mittels eines Verschlusselements 54 verschließbar ist.

Die einzelnen Schichten sind im schlauchbildenden Abschnitt 12 getrennt geführt, um sich ungehindert auszubilden. Der Extrusionskopf 41 weist eine zentrale Bohrung 43 auf, die sich entlang der Extrusionsachse A erstreckt. Im schlauchbildenden Abschnitt 12 des Extrusionskopfs 31 ist in der Bohrung 43 eine zentrale Pinole 44 sowie zwei die Pinole 44 umgebende und konzentrisch zur Extrusionsachse A angeordnete Verteilerhülsen 45, 46 angeordnet. Zwischen der Pinole 44 und der ersten Verteilerhülse 45 ist der Fließkanal 3.3 ausgebildet, wobei stromabwärts von einer Spitze 47 der Pinole 44 der bis dahin zylindrische Strömungsquerschnitt des Fließkanals 3.3 als Ringspalt geformt ist, der sich in der Hauptstromrichtung F3 bis hin zur Engstelle 15.3 verjüngt. Der mittlere Fließkanal 3.2 und der äußere Fließkanal 3.1 weisen ebenfalls im schlauchbildenden Abschnitt 12 jeweils einen als Ringspalt geformten Strömungsquerschnitt auf. Die Strömungswege der beiden Fließkanäle 3.1, 3.2 sind zwischen den beiden Verteilerhülsen 45, 46 beziehungsweise der Verteilerhülse 46 und dem Gehäuseteil 11 gebildet und können jeweils beispielsweise als Herzkurve oder Wendel geformt sein. Die Weiten der Ringspalte der beiden Fließkanäle 3.2, 3.3 nehmen im schlauchbildenden Abschnitt 12 in der Hauptstromrichtung F2, F3 jeweils bis hin zu einer Engstelle 15.2, 15.3 ab. In einem stromabwärtigen Bereich 48 des schlauchbildenden Abschnitts 12 werden die Schichten nacheinander zusammengeführt, sodass die übereinanderliegenden Schichten gemeinsam stromabwärts vom schlauchbildenden Abschnitt 12 in den als konzentrisch zur Extrusionsachse A ausgebildeten Ringraum 34 des Kopfausgangs 17 strömen können. An den Kopfausgang 17 schließt sich wiederum der Ringraum 20 des Düsenwerkzeugs 6 an.

Weiterhin weist der Extrusionskopf 41 einen Zusatzkanal 49 auf, der ausschließlich zum Spülen des Extrusionskopfs 41 verwendet wird. An den Zusatzkanal 49 ist eingangsseitig eine Spülvorrichtung 40 angeschlossen. Ein solcher Zusatzkanal 49 kann grundsätzlich auch in der in den Figuren 1 und 2 gezeigten Spülanordnung ausgebildet sein, sodass die Spülvorrichtung 21 nicht am Düsenwerkzeug 6, wie in den Figuren 1 und 2 gezeigt, sondern am Zusatzkanal 49 angeschlossen werden kann.

Die Spülvorrichtung 40 ist, wie die Haupt-Extruder 2.1, 2.2, 2.3, ein Fördergerät mit einer Förderschnecke 22 zum Extrudieren einer Kunststoffschmelze, die als Spülmedium fungiert. Im Unterschied zu der in den Figuren 1 und 2 gezeigten mobilen Spülvorrichtung 21 ist die vorliegende Spülvorrichtung 40 auch im Normalbetrieb am Extrusionskopf 41 montiert. An die Spülvorrichtung 40 kann, ebenso wie bei den Haupt-Extrudern 2.1, 2.2, 2.3, ein (nicht gezeigter) Trichter zum Zuführen des zu verarbeiteten Materials von oben in die Förderschnecke 22 vorgesehen sein. Die Spülvorrichtung 40 kann somit als Spül-Extruder bezeichnet werden. Ausgangsseitig ist der Zusatzkanal 49 an den Ringraum 34 und damit stromabwärts von dem schlauchbildenden Abschnitt 12 angeschlossen. Im Normalbetrieb, wie in der Figur 3 gezeigt, ist der Zusatzkanal 49 mit einem Sperrelement 50 verschlossen. Das Sperrelement 50 kann ein manuell bedienbarer Sperrschieber sein, der in eine nach außen hin offene Bohrung 51 eingesetzt sein kann, die in einen quer, insbesondere senkrecht zur Extrusionsachse A verlaufenden Endabschnitt 52 des Zusatzkanals 49 münden kann. Im Normalbetrieb ist das Sperrelement 50 bis in den Endabschnitt 52 des Zusatzkanals 49 eingeschoben und schließt stirnseitig mit dem Ringraum des Kopfausgangs 17 bündig ab, um die Extrusion der Vorformlinge im Normalbetrieb nicht zu beeinflussen.

Im Normalbetrieb ist auch ein stromaufwärts der Engstelle 15.2 ausgebildeter Auslauf 42 durch das in die Auslaufbohrung 53 eingesetzte Verschlusselement 54 verschlossen. Das Verschlusselement 54 kann ein Stopfen sein, der zum Spülen aus der Auslaufbohrung 53 entnommen werden kann. Um im Normalbetrieb die Extrusion der Vorformlinge nicht zu beeinflussen, kann das Verschlusselement 54 stirnseitig mit der Kanalwand der Ausgangsbohrung 39 des Haupt-Extruders 2.2 bündig abschließen. Ein solcher Auslauf 42 kann grundsätzlich auch für die in den Figuren 1 und 2 gezeigte Spülanordnung eingesetzt werden, sodass dann auf das Demontieren des Extruders verzichtet werden kann. Wegen möglicher Recycling-Kunststoffanteile hauptsächlich in mittleren Schichten der Vorformline können sich vor allem im mittleren Fließkanal 3.2 Fremdstoffe an der Engstelle 15.2 festsetzen, weshalb in der gezeigten Ausführungsform der mit dem Verschlusselement 54 verschließbare Auslauf 42 an den mittleren Fließkanal 3.2 angeschlossen ist. Grundsätzlich kann aber auch einer der anderen oder alle übrigen Haupt-Extruder 2.1, 2.3 jeweils über einen Auslauf 42 verfügen, um deren angeschlossenen Fließkanäle 3.2, 3.3 ebenso spülen zu können. Wenn die Spülanordnung mehrere der Ausläufe 42 umfasst, dann erfolgt vor dem Schritt des Spülens der Schritt des Auswählens des zu spülenden Fließkanals aus der Gesamtmenge von Fließkanälen 3.1, 3.2, 3.3.

Vor dem Schritt des Spülens wird der Öffnungsspalt 5 des Düsenwerkzeugs 6, beispielsweise durch Runterfahren der Düse relativ zum Kern 19 entlang der Extrusionsachse A, geschlossen. Weiterhin wird vor dem Spülen der Auslauf 42 durch Ziehen des Verschlusselements 54 geöffnet. Damit verbindet der Auslauf 42, der die Ausgangsbohrung 39 und die Auslaufbohrung 53 umfasst, das stromaufwärtige Ende des Fließkanals 3.2 mit der Umgebung. Außerdem wird vor dem Schritt des Spülens ein Rückfließen des Spülmediums durch die nicht zu spülenden, respektive nicht ausgewählten Fließkanälen 3.1, 3.3 durch Herunterfahren der Heizelemente 56 in den Haupt-Extrudern 2.1, 2.3 verhindert, wodurch die Kunststoffschmelzen unter die Fließtemperatur abgekühlt werden und in den Haupt-Extrudern 2.1, 2.3 quasi einen Pfropfen bilden. Des Weiteren wird vor dem Schritt des Spülens das Sperrelement 50 soweit aus dem Zusatzkanal 49 herausgezogen, dass der Endabschnitt 52 mit einem Zuführabschnitt 57 des Zusatzkanals 49 schmelzeleitend verbunden ist.

Im nächsten Schritt kann die Spülvorrichtung 40 betätigt werden, um den zu spülenden Fließkanal 3.2 in dem Kanalabschnitt 29, der zwischen dem Zulauf 25 und dem Auslauf 42 ausgebildet ist, zu spülen. In der hier gezeigten Ausführungsform umfasst der Kanalabschnitt 29 die gesamte Länge des zu spülenden Fließkanals 3.2. Die Spülvorrichtung 40 presst nun das Spülmedium über den Zulauf 25, der den Zuführabschnitt 57 und den Endabschnitt 52 des Zusatzkanals 49 sowie den stromabwärtigen Bereich 48 des schlauchbildenden Abschnitts 12 umfasst, in der Spülstromrichtung S in den zu spülenden Fließkanal 3.2 hinein. Dadurch, dass der Öffnungsspalt 5 des Düsenwerkzeugs 6 geschlossen ist und der Rückfluß über die nicht zu spülenden Fließkanälen 3.1, 3.3 verhindert ist, kann das Spülmedium durch den zu spülenden Fließkanal 3.2 hin zum Auslauf 42 strömen und dort am Ende der Auslaufbohrung 53 austreten, um die Engstelle 15.2 frei zu spülen. Die Drucküberwachung beim Spülen kann auch hier mittels der beiden Drucksensoren 30, 31 erfolgen.

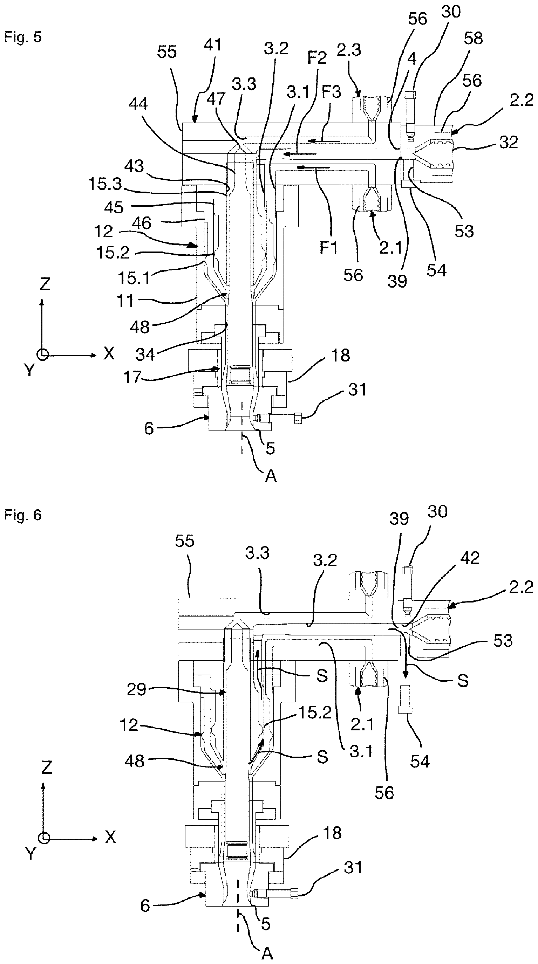

In den Figuren 5 und 6 ist eine Spülanordnung gemäß einer dritten Ausführungsform gezeigt. Die vorliegende Spülanordnung unterscheidet sich von der in den Figuren 3 und 4 gezeigten Spülanordnung darin, dass diese keinen Zusatzkanal 49 aufweist und statt einer Spülvorrichtung 40, die wie in den Figuren 3 und 4 nur zum Spülen verwendet wird, einer der Haupt-Extruder 2.1, 2.2, 2.3 als Spülvorrichtung dient. Damit entspricht die Spülanordnung weitestgehend der Spülanordnung gemäß den Figuren 3 und 4, auf deren Beschreibungen hinsichtlich der Gemeinsamkeiten insofern Bezug genommen wird. Dabei sind gleiche beziehungsweise abgewandelte Einzelheiten mit gleichen Bezugszeichen versehen.

Vor dem Schritt des Spülens wird der Öffnungsspalt 5 des Düsenwerkzeugs 6, beispielsweise durch Runterfahren der Düse relativ zum Kern 19 entlang der Extrusionsachse A, geschlossen. Weiterhin wird vor dem Spülen der Auslauf 42 zum zu spülenden Fließkanal 3.2 geöffnet. Damit verbindet der mit dem Verschlusselement 54 verschließbare Auslauf 42, der die Ausgangsbohrung 39 und die Auslaufbohrung 53 umfasst, das stromaufwärtige Ende des Fließkanals 3.2 mit der Umgebung. Als Zulauf zum zu spülenden Fließkanal 3.2 dient hier der Fließkanal 3.3, der im stromabwärtigen Bereich 48 des schlauchbildenden Abschnitts 12 stromabwärts vom Fließkanal 3.2 mündet. Grundsätzlich könnte aber auch der Fließkanal 3.1 oder beide Fließkanäle 3.1, 3.3 als Zulauf dienen. In dem, hier beispielhaft, nicht zu spülenden und auch nicht als Zulauf dienenden Fließkanal 3.1 wird durch Herunterfahren der Heizelemente 56 in dem Haupt-Extruder 2.1 die Kunststoffschmelze unter die Fließtemperatur abgekühlt, sodass ein Rückfluß des Spülmediums über den Fließkanal 3.1 verhindert wird.

Im nächsten Schritt kann der Haupt-Extruder 2.3, der hier als Spülvorrichtung verwendet wird, betätigt werden, um den Kanalabschnitt 29 des Fließkanals 3.2 zu spülen. In der hier gezeigten Ausführungsform umfasst der Kanalabschnitt 29 die gesamte Länge des zu spülenden Fließkanals 3.2. Die Spülvorrichtung, respektive der Haupt-Extruder 2.3 presst nun das Spülmedium über den Zulauf 25, der den Fließkanal 3.2 und teilweise den stromabwärtigen Bereich 48 des schlauchbildenden Abschnitts 12 umfasst, in den zu spülenden Fließkanal 3.2. Durch den im Haupt-Extruder 2.1 gebildeten Pfropfens wird ein Rückfluss durch den nicht zu spülenden Fließkanal 3.1 verhindert, sodass das Spülmedium, wegen des geschlossenen Öffnungsspalts 5, nur noch durch den zu spülenden Fließkanal 3.2 hin zum Auslauf 42 strömen und am Ende der Auslaufbohrung 53 austreten kann.

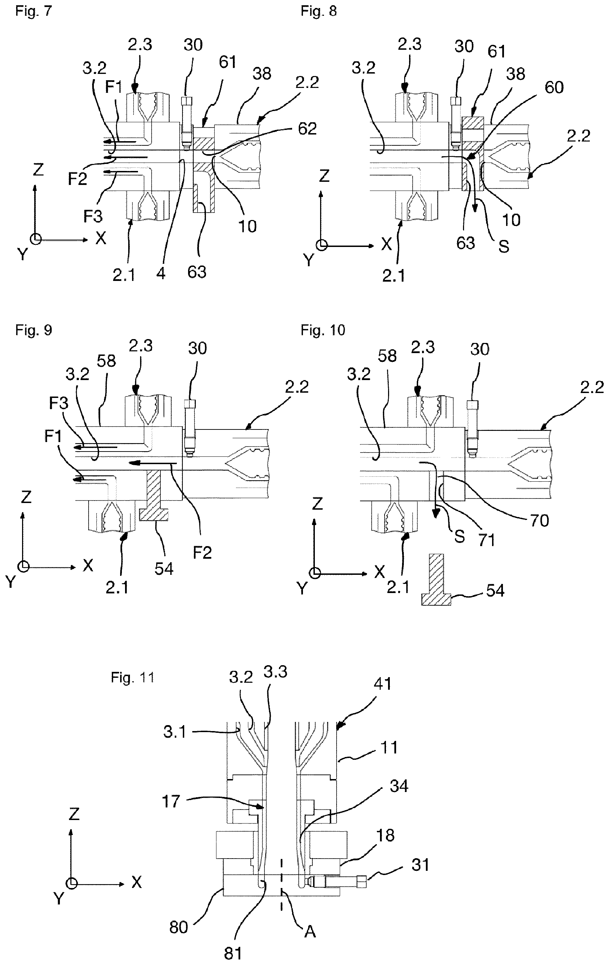

In den Figuren 7 und 8 ist eine vergrößerte Teildarstellung der Spülanordnung aus den Figuren 3 und 4 beziehungsweise den Figuren 5 und 6 mit einem alternativen Auslauf 60 dargestellt. Der Auslauf 60 umfasst ein Ventil 61, das zum Beispiel am Adapter 7 für den Haupt-Extruder 2.2 oder am Extruder-Gehäuse 38 des Haupt-Extruders 2.2 ausgebildet sein kann. Das Ventil 61 kann als 2-Wege-Ventil ausgebildet sein und kann den Fließkanal 3.2 wahlweise mit einem ersten Ventilkanal 62 oder einem zweiten Ventilkanal 63 des Ventils 61 verbinden. Das Ventil 61 kann ein Dreh-SchiebeVentil sein, bei dem der erste Ventilkanal 62 exzentrisch zur Drehachse des Ventilkörpers 64 angeordnet sein kann. Im Normalbetrieb ist das Ventil 61 geschlossen, sodass der erste Ventilkanal 62 die Adapterbohrung 9 beziehungsweise die Einspeiseöffnung 4 zum Fließkanal 3.2 mit dem Extruderausgang 10 schmelzeleitend verbindet. Der Normalbetrieb ist in der Figur 7 gezeigt. Im Spülbetrieb, der in der Figur 8 gezeigt ist, ist das Ventil 61 geöffnet, sodass der zweite Ventilkanal 63 den Fließkanal 3.2 nach außen hin öffnet und den Extruderausgang 10 des Haupt-Extruders 2.2 verschließt. Der Auslauf 60 umfasst somit die Adapterbohrung 9 und den zweiten Ventilkanal 63. Der alternative Auslauf 60 kann grundsätzlich auch in der in den Figuren 1 und 2 gezeigten Spülanordnung eingesetzt werden.

In den Figuren 9 und 10 ist eine vergrößerte Teildarstellung der Spülanordnung aus den Figuren 3 und 4 beziehungsweise den Figuren 5 und 6 mit einem weiteren alternativen Auslauf 70 dargestellt. Der Auslauf 70 umfasst eine Auslaufbohrung 71, die im Gehäuse 58 des Verteilers 55 des Extrusionskopfs 41 ausgebildet ist. Die Auslaufbohrung 71 mündet in den mittleren Fließkanal 3.2 stromabwärts von der Einspeiseöffnung 4 und stromaufwärts von der Engstelle 15.2. Die Auslaufbohrung 71 kann analog zu der in den Figuren 3 bis 6 gezeigten Auslaufbohrung 53 ausgebildet und mit dem Verschlusselement 54 verschlossen sein. In der Figur 9 ist der Normalbetrieb gezeigt, in der das Verschlusselement 54 die Auslaufbohrung 71 versperrt. In der Figur 10 ist der Spülbetrieb gezeigt, in der das Verschlusselement 54 aus der Auslaufbohrung 71 entnommen ist und diese freigibt. Der weitere alternative Auslauf 70 kann grundsätzlich auch in der in den Figuren 1 und 2 gezeigten Spülanordnung eingesetzt werden.

In der Figur 11 ist eine vergrößerte Teildarstellung der Spülanordnung aus den Figuren 3 und 4 beziehungsweise den Figuren 5 und 6 mit einer Verschlussvorrichtung 80 zum Verschließen des Kopfausgangs 17 des Extrusionskopfs 41 gezeigt. Statt vor dem Schritt des Spülens des Fließkanals den Öffnungsspalt 5 des Düsenwerkzeugs 6 zu schließen, kann anstelle des Düsenwerkzeugs 6 die Verschlussvorrichtung 80 am Träger 18 beziehungsweise an dem Gehäuseteil 11 montiert werden. An der Verschlussvorrichtung 80 kann der zweite Drucksensor 31 angeordnet sein, um den Fluiddruck in einem Ringraum 81 der Verschlussvorrichtung 80, der mit dem Ringraum 34 des Kopfausgangs 17 im Extrusionskopf 41 kommuniziert, im Spülbetrieb zu überwachen. Die Verschlussvorrichtung 80 kann auch als Verschlusskappe bezeichnet werden. Die Verschlussvorrichtung 80 kann grundsätzlich auch in der in den Figuren 1 und 2 gezeigten Spülanordnung eingesetzt werden, insbesondere dann, wenn die Spülanordnung einen Zusatzkanal 49 aufweist. Die Verschlussvorrichtung 80 kann grundsätzlich, analog zu dem in den Figuren 1 und 2 gezeigten Düsenwerkzeug 6, den Spüleingang 26 zum Anschließen der Spülvorrichtung 21 an der Verschlussvorrichtung 80 aufweisen.

**Bezugszeichenliste**

| | | | |
|---|---|---|---|
| 1 | Extrusionskopf | 28 | Auslauf |
| 2 | Extruder | 29 | Kanalabschnitt |
| 3 | Fließkanal | 30 | Drucksensor |
| 4 | Einspeisepunkt | 31 | Drucksensor |
| 5 | Öffnungsspalt | 32 | Extruderschnecke |
| 6 | Düsenwerkzeug | 33 | Antrieb |
| 7 | Adapter | 34 | Ringraum |
| 8 | Verteiler | 35 | Dorn |
| 9 | Adapterbohrung | 36 | Schrauben |
| 10 | Extruderausgang | 37 | Bolzen |
| 11 | Gehäuseteil | 38 | Extruder-Gehäuse |
| 12 | schlauchbildender Abschnitt | 39 | Ausgangsbohrung |
| 13 | Stegdornhalter | 40 | Spülvorrichtung |
| 14 | Spitze | 41 | Extrusionskopf |
| 15 | Engstelle | 42 | Auslauf |
| 16 | Ringspalt | 43 | Bohrung |
| 17 | Kopfausgang | 44 | Pinole |
| 18 | Träger | 45 | Verteilerhülse |
| 19 | Kern | 46 | Verteilerhülse |
| 20 | Ringraum | 47 | Spitze |
| 21 | Spülvorrichtung | 48 | stromabwärtiger Bereich |
| 22 | Förderschnecke | 49 | Zusatzkanal |
| 23 | Zuführvorrichtung | 50 | Sperrelement |
| 24 | Spülausgang | 51 | Bohrung |
| 25 | Zulauf | 52 | Endabschnitt |
| 26 | Spüleingang | 53 | Auslaufbohrung |
| 27 | Verschluss | 54 | Verschlusselement |
| 55 | Verteiler | | |
| 56 | Heizelement | | |
| 57 | Zuführabschnitt | | |
| 58 | Gehäuse | | |
| 60 | Auslauf | | |
| 61 | Ventil | | |
| 62 | erster Strömungsweg | | |
| 63 | zweiter Strömungsweg | | |
| 64 | Ventilkörper | | |
| 70 | Auslauf | | |
| 71 | Auslaufbohrung | | |
| 80 | Verschlussvorrichtung | | |
| 81 | Ringraum | | |
| A | Extrusionsachse | | |
| F | Hauptstromrichtung | | |
| S | Spülstromrichtung | | |
| X, Y, Z | Raumachsen | | |

## Patentansprüche

1. Verfahren zum Spülen eines Extrusionskopfs (1; 41) zum Herstellen von schlauchförmigen Vorformlingen aus thermoplastischem Kunststoff, wobei an den Extrusionskopf (1; 41) ein Extruder (2; 2.1, 2.2, 2.3) zum Zuführen von Kunststoffschmelze in einer Hauptstromrichtung (F; F1, F2, F3) in einen Fließkanal (3; 3.1, 3.2, 3.3) des Extrusionskopfs (1; 41) angeschlossen oder anschließbar ist, wobei das Verfahren den Schritt umfasst:
- Spülen des Fließkanals (3; 3.2) in einem Kanalabschnitt (29), der zwischen einem mit dem Fließkanal (3; 3.2) verbundenen Zulauf (25) und einem mit dem Fließkanal (3; 3.2) in der Hauptstromrichtung (F; F2) stromaufwärts vom Zulauf (25) verbundenen Auslauf (28; 42; 60; 70) ausgebildet ist, wobei eine Spülvorrichtung (21; 40; 2.3) ein Spülmedium über den Zulauf (25) in den Kanalabschnitt (29) des Fließkanals (3; 3.2) in einer der Hauptstromrichtung entgegengesetzten Spülstromrichtung (S) hinein presst.

2. Verfahren nach Anspruch 1, **dadurch gekennzeichnet, dass** das Verfahren weiterhin folgenden Schritt umfasst:
- Öffnen des mit dem Fließkanal (3; 3.2) verbundenen Auslaufes (28; 42; 60; 70).

3. Verfahren nach Anspruch 2, **dadurch gekennzeichnet, dass** der Schritt des Öffnens des mit dem Fließkanal (3; 3.2) verbundenen Auslaufes (28; 42; 60; 70) einen der folgenden Teilschritte umfasst:
- Öffnen eines zwischen einem Extruderausgang (10) des Extruders (2.2) und einer Einspeiseöffnung (4) des Extrusionskopfs (1; 41) zum Fließkanal (3.2) angeordneten Ventils (61), wobei der Auslauf (60) einen Ventilkanal des Ventils umfasst;
- Entfernen eines Verschlusselements (54) aus einer an den Fließkanal (3.2) angeschlossenen Auslaufbohrung (53; 71), wobei der Auslauf (42) die Auslaufbohrung (53; 71) umfasst;
- Trennen des Extruders (2) vom Extrusionskopf (1; 41), wobei der Auslauf (28) eine Einspeiseöffnung (4) des Extrusionskopfs (1; 41) umfasst.

4. Verfahren nach einem der Ansprüche 1 bis 3, **dadurch gekennzeichnet, dass** das Verfahren vor dem Schritt des Spülens des Fließkanals (3; 3.2) den Schritt umfasst:
- Schließen eines Öffnungsspalts (5) eines an einem Gehäuseteil (11) des Extrusionskopfs (1; 41) angeschlossenen Düsenwerkzeugs (6).

5. Verfahren nach Anspruch 4, **dadurch gekennzeichnet, dass** das Düsenwerkzeug (6) einen verschließbaren Spüleingang (26) aufweist, und dass das Verfahren vor dem Schritt des Spülens weiterhin folgenden Schritt umfasst:
- Verbinden eines Spülausgangs (24) der Spülvorrichtung (21) mit dem Spüleingang (26) des Düsenwerkzeugs (6), wobei der Zulauf (25) den Spüleingang (26) umfasst.

6. Verfahren nach einem der Ansprüche 1 bis 3, **dadurch gekennzeichnet, dass** das Verfahren vor dem Schritt des Spülens des Fließkanals (3; 3.2) den Schritt umfasst:
- Demontieren eines an einem Gehäuseteil (11) des Extrusionskopfs (41) angeschlossenen Düsenwerkzeugs (6) und Montieren einer Verschlussvorrichtung (80) am Gehäuseteil (11), sodass ein sich an den Fließkanal (3.2) in der Hauptstromrichtung (F2) anschließender Kopfausgang (17) des Extrusionskopfs (41) nach außen hin verschlossen ist.

7. Verfahren nach einem der Ansprüche 1 bis 6, **dadurch gekennzeichnet, dass** der Zulauf (25) einen im Extrusionskopf (41) ausgebildeten Zusatzkanal (49) umfasst, wobei der Zusatzkanal (49) an einem dem Fließkanal (3.2) zugewandten Endabschnitt (52) mit einem Sperrelement (50) verschließbar ist, und dass das Verfahren vor dem Schritt des Spülens des Fließkanals (3.2) zumindest einen der folgenden Schritte umfasst:
- Anschließen der Spülvorrichtung (40) an den Zulauf (25);
- Überführen des Sperrelements (50) in eine Freigabestellung, in der der Zusatzkanal (49) mit dem Fließkanal (3.2) fluidisch verbunden ist.

8. Verfahren nach einem der Ansprüche 1 bis 7, **dadurch gekennzeichnet, dass** der Extrusionskopf (41) ein Mehrschicht-Extrusionskopf zum Herstellen von mehrschichtigen Vorformlingen ist, wobei je herzustellender Schicht ein Fließkanal (3.1, 3.2, 3.3) vorgesehen ist, an dem jeweils ein Extruder (2.1, 2.2, 2.3) zum Zuführen von Kunststoffschmelze in der Hauptstromrichtung (F1, F2, F3) des jeweiligen Fließkanals (3.1, 3.2, 3.3) angeschlossen ist.

9. Verfahren nach Anspruch 8, **dadurch gekennzeichnet, dass** zumindest einer von den Extrudern (2.3), der dem nicht zu spülenden Fließkanal (3.3) vorgeschaltet ist, als Spülvorrichtung verwendet wird.

10. Verfahren nach Anspruch 8 oder 9, **dadurch gekennzeichnet, dass** das Verfahren vor dem Schritt des Spülens des Fließkanals (3.2) zumindest einen der folgenden Schritte umfasst:
- Auswählen des zu spülenden Fließkanals (3.2) aus einer Gesamtmenge von Fließkanälen (3.1, 3.2, 3.3) des Extrusionskopfs (41);
- Abkühlen der Kunststoffschmelze in zumindest einem von den Extrudern (2.3), der dem nicht zu spülenden Fließkanal vorgeschaltet ist, unter die Fließtemperatur der Kunststoffschmelze.

11. Verfahren nach einem der Ansprüche 1 bis 10, **dadurch gekennzeichnet, dass** der Schritt des Spülens des Fließkanals (3.2) folgenden Teilschritt umfasst:
- Überwachen des Fluiddrucks im Extrusionskopf (41).

12. Spülanordnung zum Spülen eines Extrusionskopfs (1; 41) zum Herstellen von schlauchförmigen Vorformlingen aus thermoplastischem Kunststoff, wobei an den Extrusionskopf (1; 41) ein Extruder (2; 2.1, 2.2, 2.3) zum Zuführen von Kunststoffschmelze in einer Hauptstromrichtung (F; F1, F2, F3) in einen Fließkanal (3; 3.1, 3.2, 3.3) des Extrusionskopfs (41) angeschlossen oder anschließbar ist, **dadurch gekennzeichnet,**
**dass** die Spülanordnung eine Spülvorrichtung (21; 40; 2.3) zum Durchführen des Verfahrens nach einem der Ansprüche 1 bis 11 aufweist, wobei die Spülvorrichtung (21; 40; 2.3) an einem mit dem Fließkanal (3; 3.1, 3.2, 3.3) verbundenen Zulauf (25) angeschlossen oder anschließbar ist.

13. Spülanordnung nach Anspruch 12, **dadurch gekennzeichnet, dass** in einem schlauchbildenden Abschnitt (12) des Extrusionskopfs (1; 41) der Fließkanal (3; 3.1, 3.2, 3.3) sich in der Hauptstromrichtung (F; F1, F2, F3) bis hin zu einer Engstelle (15; 15.1, 15.2, 15.3) verjüngt, wobei in der Hauptstromrichtung stromaufwärts von der Engstelle der Auslauf (28; 42; 60; 70) mit dem Fließkanal (3; 3.2) verbunden ist, und dass in der Hauptstromrichtung (F; F2) stromabwärts der Engstelle (15; 15.2) der Zulauf (25) für die Spülvorrichtung (21; 40; 2.3) zum Fließkanal (3; 3.2) ausgebildet ist.

14. Spülanordnung nach Anspruch 12 oder 13, **dadurch gekennzeichnet, dass** die Spülanordnung einen ersten Drucksensor (30) zum Überwachen eines ersten Fluiddrucks im Auslass (28; 42; 60; 70) und einen zweiten Drucksensor (31) zum Überwachen eines zweiten Fluiddrucks am Zulauf (25) oder stromabwärts vom Zulauf (25) aufweist.

15. Verwendung einer Spülvorrichtung (21; 40; 2.3) zum Spülen eines Extrusionskopfs (1; 41) zum Herstellen von schlauchförmigen Vorformlingen aus thermoplastischem Kunststoff, wobei der Extrusionskopf (1; 41) eine Einspeiseöffnung (4) zum Anschließen eines Extruders (2; 2.1, 2.2, 2.3) zum Zuführen von Kunststoffschmelze in einer Hauptstromrichtung (F; F1, F2, F3) in einen Fließkanal (3; 3.1, 3.2, 3.3) des Extrusionskopfs (1 ;41) aufweist, wobei an einen mit dem Fließkanal (3; 3.2) verbundenen Zulauf (25) die Spülvorrichtung angeschlossen wird, um ein Spülmedium über den Zulauf in einer der Hauptstromrichtung entgegengesetzten Spülstromrichtung (S) in den Fließkanal (3; 3.2) hinein zu pressen.

## Claims

1. Method for flushing an extrusion head (1; 41) for producing tubular preforms of thermoplastic material, wherein an extruder (2; 2.1, 2.2, 2.3) for feeding plastic melt in a main flow direction (F; F1, F2, F3) into a flow channel (3; 3.1, 3.2, 3.3) of the extrusion head (1; 41) is connected or connectable to the extrusion head (1; 41), the method comprising the step of:
- Flushing of the flow channel (3; 3.2) in a channel section (29) formed between an inlet (25) connected to the flow channel (3; 3.2) and an outlet (28; 42; 60; 70) connected to the flow channel (3; 3.2) in the main flow direction (F; F2) upstream of the inlet (25), wherein a flushing device (21; 40; 2.3) presses a flushing medium via the inlet (25) into the channel section (29) of the flow channel (3; 3.2) in a flushing flow direction (S) opposite to the main flow direction.

2. Method of claim 1, **characterized in that** the method further comprises the step of:
- Opening the outlet (28; 42; 60; 70) connected to the flow channel (3; 3.2).

3. Method according to claim 2, **characterized in that** the step of opening the outlet (28; 42; 60; 70) connected to the flow channel (3; 3.2) comprises one of the following substeps:
- Opening a valve (61) arranged between an extruder outlet (10) of the extruder (2.2) and a feed opening (4) of the extrusion head (1; 41) to the flow channel (3.2), wherein the outlet (60) comprises a valve channel of the valve;
- Removing a closure member (54) from an outlet bore (53; 71) connected to the flow channel (3.2), wherein the outlet (42) comprises the outlet bore (53; 71);
- Separating the extruder (2) from the extrusion head (1; 41), wherein the outlet (28) comprises a feed opening (4) of the extrusion head (1; 41).

4. Method according to any one of claims 1 to 3, **characterized in that** the method comprises, before the step of flushing the flow channel (3; 3.2), the step of:
- Closing an opening gap (5) of a nozzle tool (6) connected to a housing part (11) of the extrusion head (1; 41).

5. Method of claim 4, **characterized in that** the nozzle tool (6) comprises a closable flushing inlet (26), and that the method further comprises the following step prior to the step of flushing:
- Connecting a flushing outlet (24) of the flushing device (21) to the flushing inlet (26) of the nozzle tool (6), wherein the inlet (25) comprises the flushing inlet (26).

6. Method according to any one of claims 1 to 3, **characterized in that** the method comprises, before the step of flushing the flow channel (3; 3.2), the step of:
- Dismounting a nozzle tool (6) connected to a housing part (11) of the extrusion head (41) and mounting a closing device (80) to the housing part (11) so that a head outlet (17) of the extrusion head (41) connected to the flow channel (3.2) in the main flow direction (F2) is closed to the outside.

7. Method according to any one of claims 1 to 6, **characterized in that** the inlet (25) comprises an additional channel (49) formed in the extrusion head (41), the additional channel (49) being closable with a blocking element (50) at an end portion (52) facing the flow channel (3.2), and that the method comprises at least one of the following steps prior to the step of flushing the flow channel (3.2):
- Connecting the flushing device (40) to the inlet (25);
- Transferring the blocking element (50) to a release position in which the additional channel (49) is fluidly connected to the flow channel (3.2).

8. Method according to any one of claims 1 to 7, **characterized in that** the extrusion head (41) is a multilayer extrusion head for producing multilayer preforms, wherein a flow channel (3.1, 3.2, 3.3) is provided for each layer to be produced, to which flow channel an extruder (2.1, 2.2, 2.3) is connected in each case for feeding plastic melt in the main flow direction (F1, F2, F3) of the respective flow channel (3.1, 3.2, 3.3).

9. Method according to claim 8, **characterized in that** at least one of the extruders (2.3) upstream of the flow channel (3.3) not to be flushed is used as a flushing device.

10. Method according to claim 8 or 9, **characterized in that** the method comprises at least one of the following steps before the step of flushing the flow channel (3.2):
- Selecting the flow channel (3.2) to be flushed from a total set of flow channels (3.1, 3.2, 3.3) of the extrusion head (41);
- Cooling the plastic melt in at least one of the extruders (2.3) upstream of the flow channel not to be purged below the flow temperature of the plastic melt.

11. Method according to any one of claims 1 to 10, **characterized in that** the step of flushing the flow channel (3.2) comprises the following substep:
- Monitoring the fluid pressure in the extrusion head (41).

12. Flushing arrangement for flushing an extrusion head (1; 41) for producing tubular preforms from thermoplastic material, wherein an extruder (2; 2.1, 2.2, 2.3) for feeding plastic melt in a main flow direction (F; F1, F2, F3) into a flow channel (3; 3.1, 3.2, 3.3) of the extrusion head (41) is connected or connectable to the extrusion head (1; 41), **characterized in**
**that** the flushing arrangement has a flushing device (21; 40; 2.3) for carrying out the method according to one of claims 1 to 11, the flushing device (21; 40; 2.3) being connected or connectable to an inlet (25) connected to the flow channel (3; 3.1, 3.2, 3.3).

13. Flushing arrangement according to claim 12, **characterized in that** in a tube-forming section (12) of the extrusion head (1; 41) the flow channel (3; 3.1, 3.2, 3.3) tapers in the main flow direction (F; F1, F2, F3) up to a constriction (15; 15.1, 15.2, 15.3), the outlet (28; 42; 60; 70) being connected to the flow channel (3; 3.2) upstream of the constriction in the main flow direction, and that the inlet (25) for the flushing device (21; 40; 2.3) to the flow channel (3; 3.2) is formed downstream of the constriction (15; 15.2) in the main flow direction (F; F2).

14. Flushing assembly according to claim 12 or 13, **characterized in that** the flushing arrangement comprises a first pressure sensor (30) for monitoring a first fluid pressure at the outlet (28; 42; 60; 70) and a second pressure sensor (31) for monitoring a second fluid pressure at the inlet (25) or downstream of the inlet (25).

15. Use of a flushing device (21; 40; 2.3) for flushing an extrusion head (1; 41) for producing tubular preforms from thermoplastic material, the extrusion head (1; 41) having a feed opening (4) for connecting an extruder (2; 2.1, 2.2, 2.3) for feeding plastic melt in a main flow direction (F; F1, F2, F3) into a flow channel (3; 3.1, 3.2, 3.3) of the extrusion head (1; 41), the flushing device being connected to an inlet (25) connected to the flow channel (3; 3.2) in order to press a flushing medium via the inlet into the flow channel (3; 3.2) in a flushing flow direction (S) opposite to the main flow direction.

## Revendications

1. Procédé de rinçage d'une tête d'extrusion (1 ; 41) pour fabriquer des ébauches en forme de flexible à partir de matière thermoplastique, sachant qu'à la tête d'extrusion (1 ; 41) est raccordée ou peut être raccordée une extrudeuse (2 ; 2.1, 2.2, 2.3) pour acheminer de la matière plastique en fusion dans une direction d'écoulement principale (F ; F1, F2, F3) dans un conduit d'écoulement (3 ; 3.1, 3.2, 3.3) de la tête d'extrusion (1 ; 41), sachant que le procédé comprend l'étape de :
- rinçage du conduit d'écoulement (3 ; 3.2) dans une section de conduit (29) , qui est constituée entre une arrivée (25) reliée au conduit d'écoulement (3 ; 3.2) et une sortie (28 ; 42 ; 60 ; 70) reliée au conduit d'écoulement (3 ; 3.2) dans la direction d'écoulement principale (F ; F2) en aval de l'arrivée (25), sachant qu'un dispositif de rinçage (21 ; 40 ; 2.3) comprime un milieu de rinçage par l'arrivée (25) dans la section de conduit (29) du conduit d'écoulement (3 ; 3.2) dans une direction d'écoulement de rinçage (S) opposée à la direction d'écoulement principale.

2. Procédé selon la revendication 1, **caractérisé en ce que** le procédé comprend en plus l'étape suivante :
- ouverture de la sortie (28 ; 42 ; 60 ; 70) reliée au conduit d'écoulement (3 ; 3.2).

3. Procédé selon la revendication 2, **caractérisé en ce que** l'étape d'ouverture de la sortie (28 ; 42 ; 60 ; 70) reliée au conduit d'écoulement (3 ; 3.2) comprend une des étapes partielles suivantes :
- ouverture d'une vanne (61) disposée entre une sortie d'extrudeuse (10) de l'extrudeuse (2.2) et une ouverture d'entrée (4) de la tête d'extrudeuse (1 ; 41) vers le conduit d'écoulement (3.2), sachant que la sortie d'écoulement (60) comprend un conduit de vanne de la vanne ,
- suppression d'un élément de fermeture (54) d'un trou de sortie d'écoulement (53 ; 71) raccordé au conduit d'écoulement (3.2), sachant que la sortie d'écoulement (42) comprend le trou de sortie d'écoulement (53 ; 71),
- séparation de l'extrudeuse (2) de la tête d'extrusion (1; 41), sachant que la sortie d'écoulement (28) comprend une ouverture d'entrée (4) de la tête d'extrusion (1 ; 41).

4. Procédé selon la revendication 1 à 3, **caractérisé en ce que** le procédé comprend, avant l'étape de rinçage du conduit d'écoulement (3 ; 3.2), l'étape de :
- fermeture d'un interstice d'ouverture (5) d'un outil de buse (6) raccordé à une partie de boîtier (11) de la tête d'extrusion (1 ; 41).

5. Procédé selon la revendication 4, **caractérisé en ce que** l'outil de buse (6) comporte une entrée de rinçage (26) obturable et **en ce que** le procédé comporte en plus, avant l'étape de rinçage, l'étape suivante :
- liaison d'une sortie de rinçage (24) du dispositif de rinçage (21) à l'entrée de rinçage (26) de l'outil de buse (6), sachant que l'arrivée (25) comprend l'entrée de rinçage (26).

6. Procédé selon l'une quelconque des revendications 1 à 3, **caractérisé en ce que** le procédé comprend, avant l'étape de rinçage du conduit d'écoulement (3 ; 3.2), l'étape de :
- démontage d'un outil de buse (6) raccordé à une partie de boîtier (11) de la tête d'extrusion (41) et montage d'un dispositif de fermeture (80) sur la partie de boîtier (11) de telle manière qu'une sortie de tête (17) de tête d'extrusion (41), se raccordant au conduit d'écoulement (3.2) dans la direction d'écoulement principale est fermée vers l'extérieur.

7. Procédé selon l'une quelconque des revendications 1 à 6, **caractérisé en ce que** l'arrivée (25) comprend un conduit supplémentaire (49) constitué dans la tête d'extrusion (41), sachant que le conduit supplémentaire (49) peut être fermé sur une section finale (52) tournée vers le conduit d'écoulement (3.2) avec un élément de blocage (50) et **en ce que** le procédé comprend, avant l'étape de rinçage du conduit d'écoulement (3.2), au moins une des étapes suivantes :
- raccordement du dispositif de rinçage (40) à l'arrivée (25),
- passage de l'élément de blocage (50) dans une position de libération dans laquelle le conduit supplémentaire (49) est relié en fluide au conduit d'écoulement (3.2).

8. Procédé selon l'une quelconque des revendications 1 à 7, **caractérisé en ce que** la tête d'extrusion (41) est une tête d'extrusion multicouche pour fabriquer des ébauches multicouches, sachant qu'un conduit d'écoulement (3.1, 3.2, 3.3) est prévu pour chaque couche à réaliser auquel est raccordée respectivement une extrudeuse (2.1, 2.2, 2.3) pour acheminer la matière plastique en fusion dans la direction d'écoulement principale (F1, F2, F3) du conduit d'écoulement respectif (3.1, 3.2, 3.3).

9. Procédé selon la revendication 8, **caractérisé en ce qu'**au moins une des extrudeuses (2.3), qui est branchée en amont du conduit d'écoulement (3.3) à ne pas rincer, est utilisée comme dispositif de rinçage.

10. Procédé selon la revendication 8 ou 9, **caractérisé en ce que** le procédé comprend, avant l'étape du rinçage du conduit d'écoulement (3.2) au moins une des étapes suivantes :
- sélection du conduit d'écoulement (3.2) à rincer à partir d'une quantité totale de conduits d'écoulement (3.1, 3.2, 3.3) de la tête d'extrudeuse (41),
- refroidissement de la matière plastique en fusion dans au moins une des extrudeuses (2.3), qui n'est pas branchée en amont du conduit d'écoulement à rincer, en dessous de la température d'écoulement de la matière plastique en fusion.

11. Procédé selon l'une quelconque des revendications 1 à 10, **caractérisé en ce que** l'étape du rinçage du conduit d'écoulement (3.2) comprend l'étape partielle suivante :
- surveillance de la pression du fluide dans la tête d'extrusion (41).

12. Agencement de rinçage pour le rinçage d'une tête d'extrusion (1 ; 41) pour fabriquer des ébauches en forme de flexible en matière thermoplastique, sachant qu'à la tête d'extrusion (1 ; 41) est raccordée ou peut être raccordée une extrudeuse (2 ; 2.1, 2.2, 2.3) pour acheminer de la matière plastique en fusion dans une direction d'écoulement principale (F ; F1, F2, F3) dans un conduit d'écoulement (3 ; 3.1, 3.2, 3.3) de la tête d'extrusion (41), **caractérisé en ce que**
l'agencement de rinçage comporte un dispositif de rinçage (21 ; 40 ; 2.3) pour exécuter le procédé selon l'une quelconque des revendications 1 à 11, sachant que le dispositif de rinçage (21 ; 40 ; 2.3) est raccordé ou peut être raccordé à une arrivée (25) reliée au conduit d'écoulement (3 ; 3.1, 3.2, 3.3).

13. Agencement de rinçage selon la revendication 12, **caractérisé en ce que** dans une section formant le flexible (12) de la tête d'extrusion (1; 41), le conduit d'écoulement (3 ; 3.1, 3.2, 3.3) se réduit dans la direction d'écoulement principale (F ; F1, F2, F3) jusqu'à un point étroit (15 ; 15.1, 15.2, 15.3), sachant que dans la direction d'écoulement principale en aval du point étroit, la sortie d'écoulement (28 ; 42 ; 60 ; 70) est reliée au conduit d'écoulement (3 ; 3.2) et **en ce que** dans la direction d'écoulement principale (F ; F2) en aval du point étroit (15 ; 15.2), l'arrivée (25) pour le dispositif de rinçage (21 ; 40 ; 2.3) au conduit d'écoulement (3 ; 3.2) est constituée.

14. Agencement de rinçage selon la revendication 12 ou 13, **caractérisé en ce que** l'agencement de rinçage comporte un premier capteur de pression (30) pour surveiller une première pression de fluide dans la sortie (28 ; 42 ; 60 ; 70) et un deuxième capteur de pression (31) pour surveiller une deuxième pression de fluide à l'arrivée (25) ou en aval de l'arrivée (25).

15. Utilisation d'un dispositif de rinçage (21 ; 40, 2.3) pour le rinçage d'une tête d'extrusion (1 ; 41) pour fabriquer des ébauches en forme de flexible en matière thermoplastique, sachant que la tête d'extrusion (1 ; 41) comporte une ouverture d'alimentation (4) pour raccorder une extrudeuse (2 ; 2.1, 2.2, 2.3) pour acheminer de la matière plastique en fusion dans une direction d'écoulement principale (F ; F1, F2, F3) dans un conduit d'écoulement (3 ; 3.1, 3.2, 3.3) de la tête d'extrusion (1 ; 41), sachant que le dispositif de rinçage est raccordé à une arrivée (25) reliée au conduit d'écoulement (3 ; 3.2) pour comprimer un milieu de rinçage par l'arrivée dans une direction d'écoulement de rinçage (S) opposée à la direction d'écoulement principale dans le conduit d'écoulement (3 ; 3.2).
